# FASCICULE DE BREVET EUROPEEN

(11) **EP 1 902 899 B1**
(45) Date de publication et mention de la délivrance du brevet: **25.02.2009**
(21) Numéro de dépôt: 07301195.9
(22) Date de dépôt: 02.07.2007
(51) Int. Cl.: B60P 7/08, B60P 7/15

(54) **Dispositif pour fixer un moyen d'arrimage sur une paroi comportant une ouverture**
Vorrichtung zur Befestigung eines Koppelungsmittels an einer Wand, die eine Öffnung aufweist
Device for attaching securing means to a wall comprising an opening

(30) Priorité: 21.09.2006 FR 0608273
(43) Date de publication de la demande: 26.03.2008
(73) Titulaire: Renault SAS, 92100 Boulogne Billancourt (FR)
(72) Inventeur: Michelin, Didier, 78950 Gambais (FR)

(56) Documents cités:
- EP-A1- 1 162 112
- DE-A1- 10 134 887
- FR-A- 2 411 328
- US-A- 3 300 171
- US-A- 5 273 382

## Description

La présente invention concerne un dispositif pour fixer un moyen d'arrimage sur une paroi comportant une ouverture circulaire, destiné notamment à arrimer des objets ou des charges à l'intérieur d'un véhicule automobile.

Par moyen d'arrimage, on entend tout moyen de fixation ou d'accrochage d'un élément, équipement ou sous-ensemble de véhicule.

Un tel dispositif d'arrimage est décrit par exemple dans le document EP 1 038 726.

Les dispositifs d'arrimage connus, tels que celui décrit dans le document EP 1 038 726 nécessitent de fixer à l'intérieur de l'espace de chargement du véhicule, des rails spécifiques adaptés à recevoir des moyens d'arrimage tels que des anneaux.

La fixation de tels rails à l'intérieur du véhicule nécessite de prévoir des moyens de fixation sur la carrosserie du véhicule, tels que des écrous soudés, romaines, plaquettes ou des trous percés dans la carrosserie.

Un autre dispositif d'arrimage est divulgué par le document EP 1 162 112.

Autrement dit, les dispositifs d'arrimage connus nécessitent pour leur fixation, des travaux fastidieux et coûteux.

Un but de la présente invention est de remédier aux inconvénients précités, en créant un dispositif pour fixer un moyen d'arrimage sur une paroi comportant une ouverture circulaire, ne nécessitant aucun outil ou rail de fixation ;

Suivant l'invention, le dispositif pour fixer un moyen d'arrimage sur une paroi comportant une ouverture circulaire est caractérisé en ce qu'il comprend :
- un corps creux entourant un organe comportant une paroi flexible présentant un bord libre qui, au repos, est inscrit dans un cercle de diamètre égal ou légèrement supérieur à celui de l'ouverture circulaire, et,
- un poussoir mobile entre une première position dans laquelle il maintient par poussée radiale, le bord libre de ladite paroi flexible, sur un cercle de diamètre supérieur à celui de l'ouverture et une seconde position dans laquelle le poussoir libère ledit bord libre pour que ladite paroi flexible fléchisse radialement vers la position de repos.

L'ouverture circulaire peut être une ouverture détourée existant normalement sur une tôle de doublage intérieure ou sur le plancher d'un véhicule automobile.

Le moyen d'arrimage peut être un anneau.

Lorsque le poussoir du dispositif libère le bord libre de la paroi flexible, cette dernière peut fléchir radialement, en permettant ainsi son introduction à l'intérieur de l'ouverture circulaire.

Lorsque le poussoir est ramené dans la première position, le bord libre de la paroi flexible est bloqué dans une position dans laquelle ce bord libre est verrouillé contre le pourtour interne de l'ouverture circulaire, ce qui en même temps verrouille le dispositif par rapport à cette ouverture.

De préférence, ladite paroi flexible dudit organe est constituée par plusieurs lames élastiques.

Avantageusement, les lames définissent un volume évasé dans la direction d'application dudit corps vers l'ouverture.

De préférence également, le bord libre de chaque lame présente une surface inclinée pour faciliter son engagement dans ladite ouverture.

Dans une réalisation préférée du dispositif, le poussoir comporte une collerette adaptée pour venir en appui contre une surface interne située près du bord libre de chaque lame pour déplacer radialement celle-ci, lorsque le poussoir est dans ladite première position, et verrouiller la lame par rapport au bord de l'ouverture.

Selon d'autres particularités de l'invention :
- le poussoir est mobile contre l'action d'un ressort de rappel.
- le poussoir comporte une partie engagée librement dans un évidement complémentaire formé dans une paroi dudit corps creux, le ressort de rappel étant engagé partiellement dans un logement du corps creux opposé à ladite partie du poussoir, ce ressort prenant appui sur une paroi solidaire d'une extrémité du corps creux pouvant s'engager dans ladite ouverture circulaire.
- ledit corps creux présente sur son pourtour un bourrelet avec une première surface annulaire pouvant prendre appui sur la périphérie de l'ouverture circulaire.
- ledit corps creux présente sur son pourtour un bourrelet avec une deuxième surface annulaire qui est apte à coopérer avec l'extrémité d'une barre venant en appui sur ladite deuxième surface annulaire, du côté opposé à l'ouverture circulaire.

L'invention concerne également un véhicule automobile comportant au moins une paroi pourvue d'au moins une ouverture circulaire, et au moins un dispositif pour fixer un moyen d'arrimage sur ladite paroi selon l'invention.

De préférence, ce véhicule comprend au moins une tige télescopique formée de deux barres maintenues entre elles par un système de verrouillage, les extrémités des barres étant aptes à coopérer avec la surface annulaire du bourrelet du corps du dispositif selon une variante de l'invention.

D'autres particularités et avantages de l'invention apparaîtront encore tout au long de la description ci-après.

Aux dessins annexés, donnés à titre d'exemples, non limitatifs :
- la figure 1 est une vue en perspective du dispositif selon l'invention monté sur l'ouverture circulaire d'une paroi,
- la figure 2 est une vue éclatée du dispositif selon l'invention,
- la figure 3 est une vue en coupe suivant la ligne A-A de la figure 2, montrant le dispositif en position de montage sur une ouverture circulaire d'une paroi,
- la figure 4 est une vue analogue à la figure 3, le dispositif étant monté sur une ouverture circulaire d'une paroi en tôle (demi-vue de droite) ou d'une ouverture d'un plancher en bois (demi-vue de gauche).

Les figures annexées représentent un dispositif pour fixer un moyen d'arrimage comprenant un anneau 1 sur une ouverture circulaire 2.

L'ouverture circulaire 2 peut être une ouverture détourée existant normalement sur les tôles intérieures de doublage de la carrosserie d'un véhicule automobile notamment dans le cas des véhicules utilitaires du type fourgon. De telles ouvertures circulaires existent également dans les planchers en bois des véhicules ci-dessus.

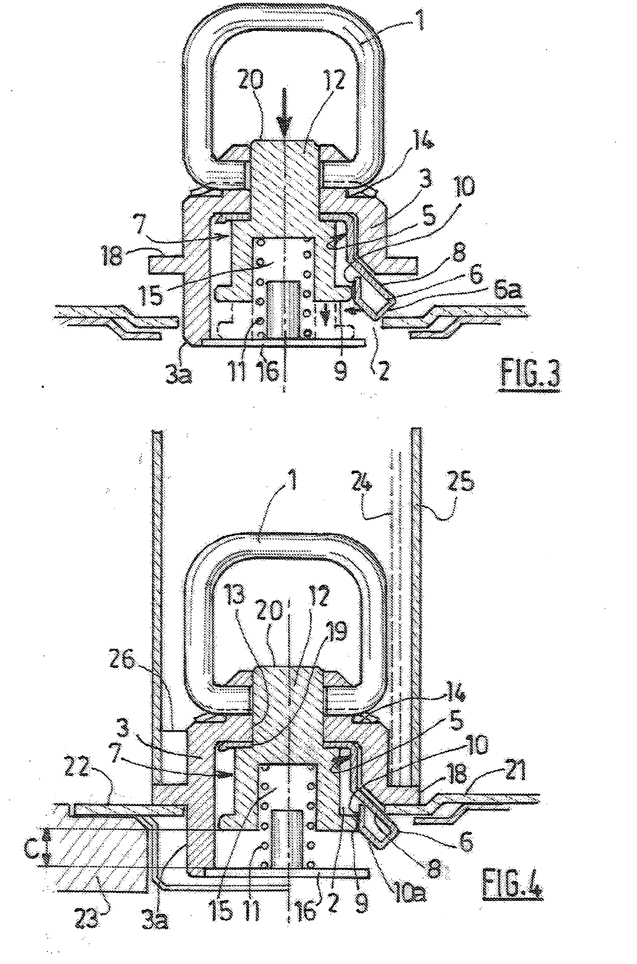

Les figures annexées montrent que le dispositif selon l'invention comprend :
- un corps creux 3 entourant un organe 4 comportant une paroi flexible 5 présentant un bord libre 6 qui, au repos, est inscrit dans un cercle de diamètre égal ou légèrement supérieur à celui de l'ouverture circulaire 2, et,
- un poussoir 7 mobile entre une première position (voir figures 3 et 4) dans laquelle il maintient par poussée radiale, le bord libre 6 de la paroi flexible 5 sur un cercle de diamètre supérieur à celui de l'ouverture 2 et une seconde position (voir position en pointillés sur la figure 3) dans laquelle le poussoir 7 libère le bord libre 6 pour que la paroi flexible puisse fléchir radialement vers la position de repos.

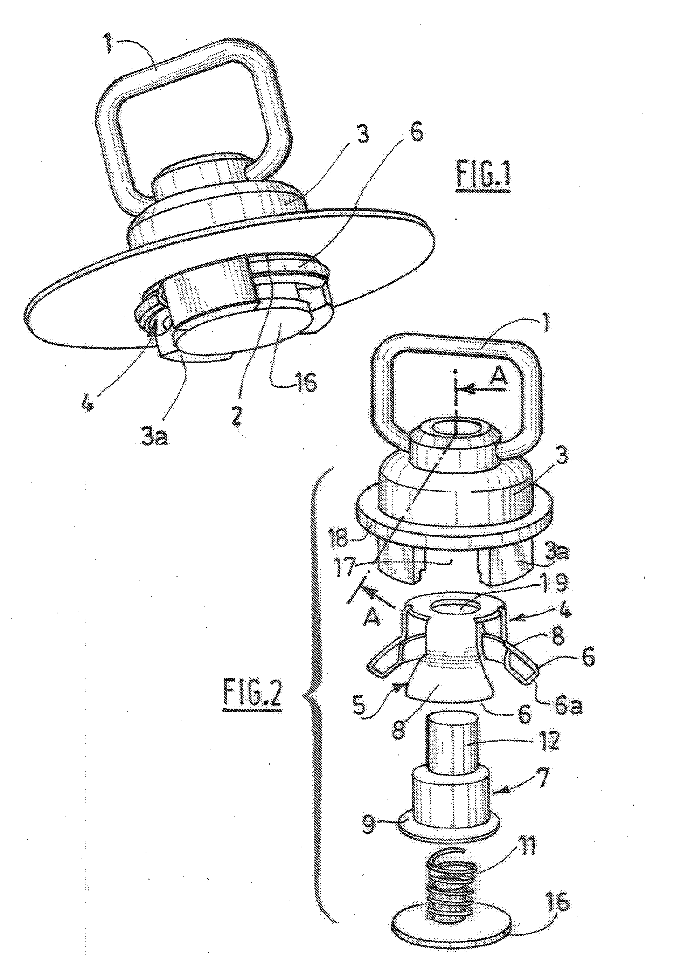

Dans l'exemple représenté (voir notamment la figure 2) la paroi flexible 5 de l'organe 4 est constituée par trois lames élastiques 8 formant un tripode.

Les trois lames élastiques 8 définissent un volume évasé dans la direction d'application du corps 3 vers l'ouverture 2.

Les figures 3 et 4 montrent d'autre part que le bord libre 6 de chaque lame 8 présente une surface inclinée 6a pour faciliter son engagement dans l'ouverture circulaire 2.

Comme montré par les figures 2, 3 et 4, le poussoir 7 comporte une collerette 9 adaptée pour venir en appui contre une surface interne 10 située en regard du bord libre 6 de chaque lame 8 pour déplacer radialement celle-ci vers l'extérieur, lorsque le poussoir est dans la position montrée sur les figures 3 et 4 et verrouiller la lame 8 par rapport au bord de l'ouverture 2, comme indiqué sur la figure 4.

On voit également sur les figures 3 et 4 que le poussoir 7 est mobile contre l'action d'un ressort de rappel 11.

Par ailleurs, le poussoir 7 comporte une partie rétrécie 12 engagée librement dans un évidement complémentaire 13 formé dans une paroi 14 du corps creux 3. Le ressort de rappel 11 est engagé partiellement dans un logement 15 du poussoir 7 opposé à la partie rétrécie 12 du poussoir 7. Ce ressort 11 prend appui sur une paroi 16 solidaire d'une extrémité 3a du corps creux 3 pouvant s'engager dans l'ouverture circulaire 2.

Cette extrémité 3a du corps creux 3 présente (voir figure 2) un évidement 17 en regard de chacune des lames 8 de l'organe 4 en forme de tripode.

Par ailleurs, le corps creux 3 présente sur son pourtour un bourrelet 18 avec une première surface annulaire pouvant prendre appui sur la périphérie de l'ouverture circulaire 2, comme montré sur la figure 4.

Dans l'exemple représenté, les lames élastiques 8 de l'organe 4 en forme de tripode sont obtenues par découpage, emboutissage et pliage à partir d'une feuille en métal élastique, un rebord de tôle formant la surface interne 10 de chaque lame.

Cet organe 4 est centré sur l'axe du corps creux 3 grâce à une ouverture 19 qui est traversée par la partie rétrécie 12 du poussoir 7.

Les figures 3 et 4 montrent en outre que l'extrémité 20 du poussoir 7 opposée à la collerette 9 est accessible à un opérateur, à l'intérieur de l'anneau 1.

Pour fixer le dispositif que l'on vient de décrire dans une ouverture 2 de détourage d'une tôle 21 de doublage intérieure (voir partie droite de la figure 4) ou dans l'ouverture d'une rondelle 22 (voir partie gauche de la figure 4) qui recouvre un trou pratiqué dans un plancher en bois 23, on procède comme suit :
- on place le corps creux 3 dans l'axe de l'ouverture 2, comme montré sur la figure 3. Dans cette position, le bord incliné 6a des lames 8 de l'organe 5 en forme de tripode bute contre la périphérie de l'ouverture 2. La collerette 9 du poussoir 7 est en appui contre le repli intérieur 10 des lames 8.
- L'opérateur pousse alors manuellement sur l'extrémité 20 du poussoir 7 pour déplacer la collerette 9 suivant sa course C (voir figure 4) à l'encontre du ressort 11 jusqu'à ce que la collerette 9 atteigne la position en pointillés représentée sur la figure 3. Dans cette position, les lames flexibles 8 sont libérées et peuvent se rétracter radialement vers l'intérieur, conjointement sous l'effet de leur élasticité et de la poussée exercée sur le corps 3 vers l'ouverture 2. Le bord des lames 8 peut alors s'engager dans l'ouverture 2. Lorsque la partie annulaire 18 du corps 3 est en butée contre le pourtour de l'ouverture 2, l'opérateur peut relâcher le poussoir 7 ce qui met la collerette 9 de ce poussoir en appui contre la surface intérieure 10 des lames 8. Le déplacement de la collerette 9 vers cette position est favorisé par la pente l0a formée par le repli des lames 8.

Dans la position montrée sur la figure 4, le bord 6 des lames 8 est inscrit dans un cercle de diamètre supérieur à celui de l'ouverture 2 et la butée formée par la collerette 9 du poussoir empêche le fléchissement des lames 8 vers l'intérieur, de sorte que le dispositif est solidement verrouillé par rapport à l'ouverture 2.

Pour déverrouiller le dispositif, il suffit d'appuyer sur le poussoir 7 pour libérer les lames 8, puis de tirer sur l'anneau 1 pour extraire le corps 3 de l'ouverture 2.

Ainsi, le verrouillage et le déverrouillage du dispositif par rapport à l'ouverture 2 ne nécessitent aucun outil.

L'anneau 1 du dispositif peut servir pour arrimer à l'intérieur du véhicule divers objets.

Le dispositif peut également servir à fixer une tige télescopique qui peut par exemple être utilisée pour séparer ou maintenir des charges pendant le transport. Une tige télescopique de ce type est formée de deux barres tubulaires 24, 25, dont l'une 24 coulisse à l'intérieur de l'autre 25. Ces barres 24, 25 sont pourvues d'un système de verrouillage bien connu de l'homme du métier permettant de régler la longueur de la tige et de bloquer les barres l'une par rapport à l'autre.

La figure 4 représente l'accostage de chacune des barres 24, 25 avec un dispositif selon l'invention. Bien entendu, lorsque la tige télescopique est montée à l'intérieur du véhicule, seule une extrémité de chaque barre coopère avec un dispositif selon l'invention.

Dans le cas de la barre 24, le diamètre intérieur de celle-ci correspond au diamètre extérieur du corps 3. Dans le cas de la barre 25 dont le diamètre est plus important, une bague 26 est intercalée entre le corps 3 et la barre 25.

Dans les deux cas, les extrémités des barres 24 et 25 sont en appui sur une deuxième surface annulaire du bourrelet 18 du corps 3 dont les dimensions ont été choisies à cet effet, cette deuxième surface étant située du côté opposé à l'ouverture circulaire.

Chaque barre coopère ainsi avec le corps du dispositif selon l'invention sans jeu radial. La tige est alors simplement maintenue en position par extension entre les deux dispositifs.

## Revendications

1. Dispositif pour fixer un moyen d'arrimage (1) sur une paroi comportant une ouverture circulaire (2), **caractérisé en ce qu'**il comprend :
- un corps creux (3) entourant un organe (4) comportant une paroi flexible (5) présentant un bord libre (6) qui au repos est inscrit dans un cercle de diamètre égal ou légèrement supérieur à celui de l'ouverture circulaire (2), et,
- un poussoir (7) mobile entre une première position dans laquelle il maintient par poussée radiale, le bord libre (6) de ladite paroi flexible (5), sur un cercle de diamètre supérieur à celui de l'ouverture (2) et une seconde position dans laquelle le poussoir (7) libère ledit bord libre (6) pour que ladite paroi flexible (5) fléchisse radialement vers la position de repos.

2. Dispositif selon la revendication 1, **caractérisé en ce que** ladite paroi flexible (5) dudit organe (4) est constituée par plusieurs lames élastiques (8).

3. Dispositif selon la revendication 2, **caractérisé en ce que** ledit organe (4) comporte trois lames élastiques (8).

4. Dispositif selon l'une des revendications 2 ou 3, **caractérisé en ce que** les lames (8) définissent un volume évasé dans la direction d'application dudit corps (3) vers l'ouverture (2).

5. Dispositif selon l'une des revendications 2 à 4, **caractérisé en ce que** le bord libre (6) de chaque lame (8) présente une surface inclinée (6a) pour faciliter son engagement dans ladite ouverture (2).

6. Dispositif selon l'une des revendications 2 à 5, **caractérisé en ce que** le poussoir (7) comporte une collerette (9) adaptée pour venir en appui contre une surface interne (10) située près du bord libre (6) de chaque lame (8) pour déplacer radialement celle-ci, lorsque le poussoir est dans ladite première position, et verrouiller la lame (8) par rapport au bord de l'ouverture (2).

7. Dispositif selon l'une des revendications 1 à 6, **caractérisé en ce que** le poussoir (7) est mobile contre l'action d'un ressort de rappel (11).

8. Dispositif selon la revendication 7, **caractérisé en ce que** le poussoir (7) comporte une partie (12) engagée librement dans un évidement complémentaire (13) formé dans une paroi (14) dudit corps creux (3), le ressort de rappel (11) étant engagé partiellement dans un logement (15) du corps creux (3) opposé à ladite partie (12) du poussoir (7), ce ressort (11) prenant appui sur une paroi (16) solidaire d'une extrémité (3a) du corps creux (3) pouvant s'engager dans ladite ouverture circulaire (2).

9. Dispositif selon l'une des revendications 1 à 8, **caractérisé en ce que** ledit corps creux (3) présente sur son pourtour un bourrelet (18) avec une première surface annulaire pouvant prendre appui sur la périphérie de l'ouverture circulaire (2).

10. Dispositif selon l'une des revendications 1 à 9, **caractérisé en ce que** ledit corps creux (3) présente sur son pourtour un bourrelet (18) avec une deuxième surface annulaire qui est apte à coopérer avec l'extrémité d'une barre (24, 25) venant en appui sur ladite surface annulaire, du côté opposé à l'ouverture circulaire.

11. Dispositif selon l'une des revendications 1 à 10, **caractérisé en ce que** le moyen d'arrimage (1) est un anneau.

12. Véhicule automobile comportant au moins une paroi pourvue d'au moins une ouverture circulaire (2), et au moins un dispositif pour fixer un moyen d'arrimage (1) sur ladite paroi selon l'une des revendications 1 à 11.

13. Véhicule automobile selon la revendication 12, **caractérisé en ce qu'**il comprend au moins une tige télescopique formée de deux barres (24, 25) maintenues entre elles par un système de verrouillage, les extrémités des barres étant aptes à coopérer avec la surface annulaire du bourrelet (18) du corps du dispositif selon la revendication 10.

## Claims

1. Device for attaching a securing means (1) to a wall comprising a circular opening (2), **characterized in that** it comprises:
- a hollow body (3) surrounding a member (4) comprising a flexible wall (5) having a free edge (6) which, at rest, is inscribed in a circle with a diameter equal to or slightly greater than that of the circular opening (2), and
- a button (7) that can be moved between a first position in which it keeps by radial pressure the free edge (6) of the said flexible wall (5) on a circle with a diameter greater than that of the opening (2) and a second position in which the button (7) releases the said free edge (6) so that the said flexible wall (5) flexes radially towards the rest position.

2. Device according to Claim 1, **characterized in that** the said flexible wall (5) of the said member (4) consists of several elastic blades (8).

3. Device according to Claim 2, **characterized in that** the said member (4) comprises three elastic blades (8) .

4. Device according to one of Claims 2 or 3, **characterized in that** the blades (8) define a volume widening out in the direction of application of the said body (3) towards the opening (2).

5. Device according to one of Claims 2 to 4, **characterized in that** the free edge (6) of each blade (8) has an inclined surface (6a) to make it easier to engage in the said opening (2).

6. Device according to one of Claims 2 to 5, **characterized in that** the button (7) comprises a collar (9) adapted to press against an inner surface (10) situated close to the free edge (6) of each blade (8) in order to move the latter radially, when the button is in the said first position, and to lock the blade (8) relative to the edge of the opening (2).

7. Device according to one of Claims 1 to 6, **characterized in that** the button (7) can be moved against the action of a return spring (11).

8. Device according to Claim 7, **characterized in that** the button (7) comprises a portion (12) engaged freely in a matching recess (13) formed in a wall (14) of the said hollow body (3), the return spring (11) being engaged partially in a housing (15) of the hollow body (3) opposite to the said portion (12) of the button (7), this spring (11) pressing on a wall (16) secured to an end (3a) of the hollow body (3) that is able to be engaged in the said circular opening (2).

9. Device according to one of Claims 1 to 8, **characterized in that** the said hollow body (3) has, on its periphery, a flange (18) with a first annular surface that is able to press on the periphery of the circular opening (2).

10. Device according to one of Claims 1 to 9, **characterized in that** the said hollow body (3) has, on its periphery, a flange (18) with a second annular surface that is capable of interacting with the end of a bar (24, 25) pressing on the said annular surface, on the side opposite to the circular opening.

11. Device according to one of Claims 1 to 10, **characterized in that** the securing means (1) is a ring.

12. Motor vehicle comprising at least one wall provided with at least one circular opening (2), and at least one device for attaching a securing means (1) to the said wall according to one of Claims 1 to 11.

13. Motor vehicle according to Claim 12, **characterized in that** it comprises at least one telescopic rod formed of two bars (24, 25) held together by a locking system, the ends of the bars being capable of interacting with the annular surface of the flange (18) of the body of the device according to Claim 10.

## Patentansprüche

1. Vorrichtung zur Befestigung eines Verankerungsmittels (1) an einer eine kreisförmige Öffnung (2) aufweisenden Wand, **dadurch gekennzeichnet, dass** sie aufweist:
- einen Hohlkörper (3), der ein Organ (4) umgibt, das eine flexible Wand (5) mit einem freien Rand (6) aufweist, der in der Ruhestellung in einem Kreis liegt, dessen Durchmesser gleich dem oder geringfügig größer als derjenige der kreisförmigen Öffnung (2) ist, und
- einen Drücker (7), der zwischen einer ersten Stellung, in der er den freien Rand (6) der flexiblen Wand (5) durch radialen Schub auf einem Kreis mit einem Durchmesser hält, der größer ist als derjenige der Öffnung (2), und einer zweiten Stellung beweglich ist, in der der Drücker (7) den freien Rand (6) freigibt, damit die flexible Wand (5) radial in die Ruhestellung nachgibt.

2. Vorrichtung nach Anspruch 1, **dadurch gekennzeichnet, dass** die flexible Wand (5) des Organs (4) aus mehreren elastischen Lamellen (8) besteht.

3. Vorrichtung nach Anspruch 2, **dadurch gekennzeichnet, dass** das Organ (4) drei elastische Lamellen (8) aufweist.

4. Vorrichtung nach einem der Ansprüche 2 oder 3, **dadurch gekennzeichnet, dass** die Lamellen (8) in der Richtung des Aufbringens des Körpers (3) zur Öffnung (2) hin ein ausgeweitetes Volumen definieren.

5. Vorrichtung nach einem der Ansprüche 2 bis 4, **dadurch gekennzeichnet, dass** der freie Rand (6) jeder Lamelle (8) eine Schrägfläche (6a) aufweist, um ihre Einführung in die Öffnung (2) zu erleichtern.

6. Vorrichtung nach einem der Ansprüche 2 bis 5, **dadurch gekennzeichnet, dass** der Drücker (7) einen Kragen (9) aufweist, der geeignet ist, um gegen eine Innenfläche (10) in Auflage zu kommen, die sich nahe dem freien Rand (6) jeder Lamelle (8) befindet, um diese radial zu verschieben, wenn der Drücker in der ersten Stellung ist, und die Lamelle (8) bezüglich des Rands der Öffnung (2) zu verriegeln.

7. Vorrichtung nach einem der Ansprüche 1 bis 6, **dadurch gekennzeichnet, dass** der Drücker (7) gegen die Wirkung einer Rückstellfeder (11) beweglich ist.

8. Vorrichtung nach Anspruch 7, **dadurch gekennzeichnet, dass** der Drücker (7) einen Teil (12) aufweist, der frei in eine komplementäre Aussparung (13) eingeführt wird, die in einer Wand (14) des Hohlkörpers (3) ausgebildet ist, wobei die Rückstellfeder (11) teilweise in eine Aufnahme (15) des Hohlkörpers (3) entgegengesetzt zu dem Teil (12) des Drückers (7) eingeführt wird, wobei diese Feder (11) auf einer Wand (16) aufliegt, die fest mit einem Ende (3a) des Hohlkörpers (3) verbunden ist, das sich in die kreisförmige Öffnung (2) einfügen kann.

9. Vorrichtung nach einem der Ansprüche 1 bis 8, **dadurch gekennzeichnet, dass** der Hohlkörper (3) auf seinem Umfang einen Wulst (18) mit einer ersten Ringfläche aufweist, die auf der Peripherie der kreisförmigen Öffnung (2) aufliegen kann.

10. Vorrichtung nach einem der Ansprüche 1 bis 9, **dadurch gekennzeichnet, dass** der Hohlkörper (3) auf seinem Umfang einen Wulst (18) mit einer zweiten Ringfläche aufweist, die mit dem Ende eines Stabs (24, 25) zusammenwirken kann, der auf der der kreisförmigen Öffnung entgegengesetzten Seite auf der Ringfläche in Auflage kommt.

11. Vorrichtung nach einem der Ansprüche 1 bis 10, **dadurch gekennzeichnet, dass** das Verankerungsmittel (1) ein Ring ist.

12. Kraftfahrzeug, das mindestens eine mit mindestens einer kreisförmigen Öffnung (2) versehene Wand und mindestens eine Vorrichtung zur Befestigung eines Verankerungsmittels (1) an der Wand nach einem der Ansprüche 1 bis 11 aufweist.

13. Kraftfahrzeug nach Anspruch 12, **dadurch gekennzeichnet, dass** es mindestens eine Teleskopstange aufweist, die von zwei Stäben (24, 25) gebildet wird, die durch ein Verriegelungssystem aneinander gehalten werden, wobei die Enden der Stäbe mit der Ringfläche des Wulsts (18) des Körpers der Vorrichtung nach Anspruch 10 zusammenwirken können.
